# EUROPEAN PATENT APPLICATION

(11) **EP 2 058 976 A1**
(43) Date of publication of application: **13.05.2009**
(21) Application number: 07021566.0
(22) Date of filing: 06.11.2007
(51) Int. Cl.: H04L 12/24, H04L 12/28, H04L 12/56

(54) **Method for resource management in a heterogeneous wireless communication system and a heterogeneous wireless communication system**

(71) Applicant: Nokia Siemens Networks Oy, 02610 Espoo (FI)
(72) Inventor: Köpsel, Andreas, 14199 Berlin (DE); Schläger, Morten Dr., 14059 Berlin (DE)
(74) Representative: Bruglachner, Thomas E.

(57) **Abstract**

The invention describes a method for resource management in a heterogeneous wireless communication system, comprising a number of access networks, at least some of them having a resource management entity being responsible for executing flows between a number of user equipment and the respective access network, comprising the steps of:
- providing a flow descriptor comprising flow specific properties for each flow within the communication system;
- storing all of the provided flow descriptors within a flow descriptor pool;
- checking the flow descriptors in the flow descriptor pool whether their respective flow specific properties are able to be served by one of the access networks; and
- allocating resources by the access networks for a flow based on the evaluation of the flow descriptor pool.

## Description

The invention relates to a method for resource management in a heterogeneous wireless communication system comprising a number of access networks at least some of them having a resource management entity being responsible for executing flows between a number of user equipment and the respective access network. The invention further relates to a heterogeneous wireless communication system.

In recent years, the number of available wireless access technologies has increased significantly leading to an amount of competing and complementing systems offering end users wireless connectivity. Operators of those wireless communication systems have started to deploy such systems in parallel leading to a heterogeneous landscape of wireless access including 3G (third generation), WLAN (Wireless Local Area Network), WIMAX (Worldwide Interoperability for Microwave Access), UWB (Ultra Wide Band), etc. While some efforts have been invested for coupling different wireless access networks (e.g. inter-working WLAN from 3GPP) in order to offer a seamless service to end users, a common efficient method for handling resource management in heterogeneous environments is still lacking. Methods for handling resource management can include bearer allocation, handoff management and the like. Thus, developing efficient means to deal with the increasing complexity of resource allocation and handoff management in heterogeneous wireless environments is of significant importance.

Today, if a new user (i.e. user equipment) connects to a network, prepares a handover to another cell, creates a new PDP context or starts a new session, the resource management of an access network must check the availability of sufficient resources and allocate them to the subscriber if they are available. Even in a homogeneous environment as we have today, resource allocation is a challenging task because it directly affects the system performance, ARPU (Average Revenue per User) and user satisfaction. Networks consisting of heterogeneous access networks will need an efficient resource management, too, but add a level of complexity. In a heterogeneous environment for each user terminal and the associated flows, an assignment decision must be made. This means that each flow must be assigned to one access network out of the set of available networks under operator control. In this connection, a flow is defined as a stream of data for a specific application. Therefore, a flow comprises a sequence of data packets.

Assignment decisions for heterogeneous communication systems are more difficult to solve than those in homogeneous environments due to the wide variety of differing network characteristics:
i) Wireless access systems may differ in their ability to provide connectivity with improved quality of service (QoS) and the available means for resource allocation and control.
ii) Wireless access systems may differ in their coverage of geographic areas. Combined with hard predictable and user movement patterns, vertical handoffs among different access technologies may occur more frequently. Furthermore, such handoffs must not break the operator QoS guarantees negotiated with the end user equipment.
iii) Based on an operator or a user policy, use of certain access networks should be denied to individual users or flows, e.g. due to compensation issues.
iv) Besides the heterogeneous environment under common control of a single or multiple operators, further non-controlled systems may coexist, e.g. WLANs deployed by the user in his home environment.

A heterogeneous resource management must be able to incorporate such systems.

To tackle this problem, one can think about a central approach in which a single resource management manages the resources of all networks or a hierarchical resource management (HRM) system in which intra-system resource management systems manage the local resources and a meta instance coordinates the system wide resource management. These approaches have some severe disadvantages. These drawbacks are:
i) For each wireless access system, the HRM must know specific resource management details, e.g. whether a bearer can be maintained for the current end user movement vector with a given QoS parameter. For a total of n wireless access systems the HRM must incorporate at most n different resource management systems. Adding further access networks increases system complexity and results in adding new functionality to already deployed systems. The introduction of an abstract model for resource management to allow a unified view by the HRM to the underline technology-specific research management systems without any technology-related details does not significantly mitigate the described problem.
ii) Furthermore, the HRM doubles functionality already present in the individual technology specific resource management. Changes and improvements to these management systems also force changes in the already deployed HRM.
iii) A HRM will most likely require a significant amount of processing power to make an assignment decision. For a large operator network, a joint decision incorporating all available information might not be feasible.

It is therefore an object of the present invention to provide means to deal with the increasing complexity of resource allocation and handoff management in heterogeneous wireless environments.

This problem is solved by the independent claims. Preferred embodiments are set out in the respective dependent claims.

According to the invention, a method for resource management in a heterogeneous wireless communication system is provided which comprises a number of access networks, each of them having a resource management entity being responsible for executing flows between a number of user equipment and the respective access network. The method comprises the steps of providing a flow descriptor comprising flow specific properties for each flow within the communication system; storing all of the provided flow descriptors within a flow descriptor pool; checking the flow descriptors in the flow descriptor pool whether their respective flow specific properties are able to be served by one of the access networks; and allocating resources by the access networks for a flow based on the evaluation of the flow descriptor pool.

A heterogeneous wireless communication system according to the invention comprises a number of access networks, each of them having a resource management entity being responsible for executing flows between a number of user equipment and the respective access network. Furthermore, a resource management system comprises a flow descriptor pool for providing flow descriptors, each of the flow descriptors having flow specific properties for each flow within the communication system wherein the flow descriptors in the flow descriptor pool may be checked whether their respective flow specific properties are able to be served by one of the access networks for the purpose of allocating resources by one of the access networks based on the evaluation of the flow descriptor pool.

Core element of the invention is a pool of flow descriptors. These flow descriptors describe mandatory base properties or parameters for each flow. Each of the flow descriptors can comprise information about transport related parameters (e.g. IP transport address, IP flow identifier), quality of service (QoS) parameters, policy information, location information, and so on. The flow descriptor pool which might be distributed, e.g. per routing area, allows a self-organizing resource management (SRM). A first advantage of the invention is that knowledge of any access technology specific resource management.is not necessary. Adding new wireless access networks to the communication system does not require any changes in controlling the flow descriptors pool and thus deploying a new access technology is simplified. A further advantage is that the assignment decision (which flow will be served by what access network) can be taken jointly in a self-organized fashion by all participating access networks without any explicit action of a controlling unit. Therefore, any intervention during an optimal normal stable state operation is not required. However, in case a non-solvable conflict occurs, a controlling entity of the flow descriptors pool can operate in the role of an arbiter and can make a final assignment decision authoritative for all participating wireless access networks. With the invention it is possible to consider policy-related information defined either by the access network operator or end user including compensation relevant data, management actions and so on when making assignment decisions. The invention is able to ensure QoS guarantees either negotiated or statically assigned to an individual user or flow, even during handoffs.

According to a further embodiment, the step of checking the flow descriptors in the flow descriptor pool is carried out by the resource management entities of a respective access network. According to this embodiment, the access networks themselves check the existing flow descriptors in the flow descriptor pool whether they are able to serve some of the described flows. Checking the flow descriptors in the flow descriptor pool may be carried out periodically or event driven.

A flow descriptor for a respective flow can be created when user equipment connects to one of the access networks for the first time. Alternatively, a flow descriptor for a flow may be created by negotiation between user equipment and a controlling entity of the flow descriptor pool. Furthermore, a flow descriptor may be created for every new application. The controlling entity thereby defines a service interface to entities which are not part of the flow descriptor pool, such as user equipment or an OAM (Operation, Administration and Maintenance).

According to a further embodiment, the flow descriptor pool is separated at least in two subsets for assigned and non-assigned flow descriptors. An assigned flow descriptor is defined as a flow descriptor which corresponding flow currently is served by an access network. A non-assigned flow descriptor is defined as a flow descriptor whose corresponding flow is waiting to be served by an access network. The separation of the flow descriptors in assigned and non-assigned flow descriptors simplifies the step of checking the flow descriptors in a flow descriptor pool since only non-assigned flow descriptors have to be considered.

When a flow will be served or currently is served by one of the access networks, the respective flow descriptor will be marked as assigned flow descriptor. Assigned flow descriptors will be excluded from the step of checking the flow descriptors in the flow descriptor pool for the purpose of assigning it to one of the access networks.

According to a further embodiment, flow descriptors will remain in the flow descriptor pool when the respective flows cannot be served by one of the access networks. It thus can be assured that each flow will be considered to get assigned to an access network.

Upon storing a flow descriptor in the flow descriptor pool for each flow descriptor a deadline for obtaining service from one of the access networks is defined. This is especially of advantage for flows being already served and requiring a handoff to another network.

Since a flat un-ordered set of non-assigned flow descriptors is insufficient, the flow descriptors in the flow descriptor pool are ordered in one ore more queues according to their deadline. Flow descriptors within the same queue are handled with the same priority. In case the flow descriptor pool comprises more than one queue, each of the queues is assigned to a different priority. Thereby, queues with the highest priority are checked first. Furthermore, in a preferred embodiment, a queue with a lower priority is checked when all of the flow descriptors of a queue with a higher priority are assigned flow descriptors.

In a further preferred embodiment an access network checks the highest priority queue first and is not allowed to serve any flows in lower priority queues unless the higher queues are empty. Based on an earliest-deadline-first (EDF) principle, the servable flow with the earliest deadline is chosen by one of the access networks. However, while this scheme ensures prioritised service for high priority flows, this scheme could also lead to starvation of flows located in low priority queues. It is to be understood that other approaches than the EDF principle could be used, too.

To circumvent such situations, each flow descriptor gets assigned to a priority value defining the current priority queue where the flow descriptor must be inserted. The initial priority value is based on the current flow service deadline which will be increased unless the flow descriptor does not become an assigned flow descriptor within the current service deadline. The initial priority values may be calculated by the controlling entity. The controlling entity may increase the priority value for non-assigned flows periodically and re-assigns flow descriptors according to their actual priority value to the priority queues. Thus, with an increase in elapsed waiting time for service, the probability of a flow descriptor to get assigned to one of the access networks is increased.

It is assumed that a dynamic recalculation of the above mentioned system parameter according to a current load condition within the communication system is of advantage. Under normal stable non-overloaded operation of the communication system, the queue sizes should remain quite low and the controlling entity therefore does not have to intervene.

According to a further embodiment when a flow cannot be served by any of the access networks, the controlling entity acts as an arbiter and makes a decision in which of the access networks a flow assignment can be forced.

According to another embodiment, the controlling entity rejects an insertion of additional flows into the flow descriptor pool if predefined queue sizes thresholds are exceeded.

As apparent from the description above, the controlling entity is responsible for managing all internal operations. This includes flow descriptor management with insertion and removal of flow descriptors to and from the flow descriptor pool. These control entity functions are accessible via a dedicated interface for flow management. Furthermore, the controlling entity is responsible for queue maintenance. It monitors service deadlines of all active flow descriptors and calculates the priority values assigned to each flow descriptor and thus determines the mapping of all flow descriptors to individual priority queues. Flow descriptors are soft-state entities, i.e. they must be refreshed periodically either by a serving access network for implicit registration or by the controlling entity via a management action in the explicit case.

According to a further embodiment when a flow is to be released by a serving access network, the serving access network continue its service provisioning unless another access network decides to serve the flow or physical conditions do not allow continuously stable connectivity. In case an error occurs, an error condition must be signalled to the controlling entity.

Resources allocated to a specific flow must not be released until the flow descriptor is either re-defined to another access network of the number of access networks or removed from the flow descriptor pool.

A flow descriptor can be re-inserted to the pool subset of non-assigned flow descriptors even when it still is served by an access network of the number of access networks. This embodiment allows handover to another access network.

In a further embodiment for improving handover, each of the flow descriptors additionally contains a list of access networks which are able to take over the respective flow. This simplifies the function of the controlling entity as an arbiter.

In a further embodiment, the assigned flow descriptors in the flow descriptor pool comprise information about not optimal QoS support. Thereby, certain services will benefit from flexible QoS vectors which allow using different codecs for voice and video. For such services, a QoS vector should not contain absolute numbers but rather ranges. If such a flow can only be served by an access network with low quality, the flow descriptor is put in this new class. Once an access network is able to serve this flow better, it is reassigned.

According to a further embodiment, the assigned flow descriptors in the flow descriptor pool comprise a bandwidth for services which are tolerable to modifications to the current QoS. The tolerance to current QoS may be up and down.

The method described above may be provided as a software system. It also can be provided as hardware or a combination thereof.

The invention therefore further claims for a computer program product directly loadable into the internal memory of a digital computer comprising software code portions for performing the afore described method when the product is run on a computer.

In a further embodiment of the heterogeneous wireless communication system according to the invention, the resource management system comprises an interface to the resource management entities of the number of access networks for exchanging of data regarding the allocation of resources for flows. This interface is the so-called H2 interface which may be separated in two parts: A query interface H2a may be used by access networks to query the available priority queues and register or deregister a served flow. Interface H2b defines an event-notification like sub-interface, where the controlling entity and the attached access networks can exchange notifications, e.g. when a flow requires immediate handoff.

The resource management system further comprises an interface to external entities. This is the so-called H1 interface which allows external entities to register/deregister flows with the controlling entity.

According to a further embodiment, the resource management system comprises a controlling entity for administrating the flow descriptors in the flow descriptor pool. The controlling entity is to set up a flow descriptor in case user equipment connects to one of the access networks for the first time. Furthermore, the controlling entity is to set up a flow descriptor in case user equipment and a controlling entity of the flow descriptor pool are negotiating about resources for a flow. The controlling entity defines a service interface to entities which are not part of the flow descriptor pool.

According to a further embodiment, the flow descriptor pool comprises separate entities for storing
- non-assigned flow descriptors which are waiting to be served by one of the access networks,
- assigned flow descriptors which are served by one of the access networks,
- assigned flow descriptors having a not optimal QoS support, and
- assigned flow descriptors allowing a bandwidth for the current QoS support.

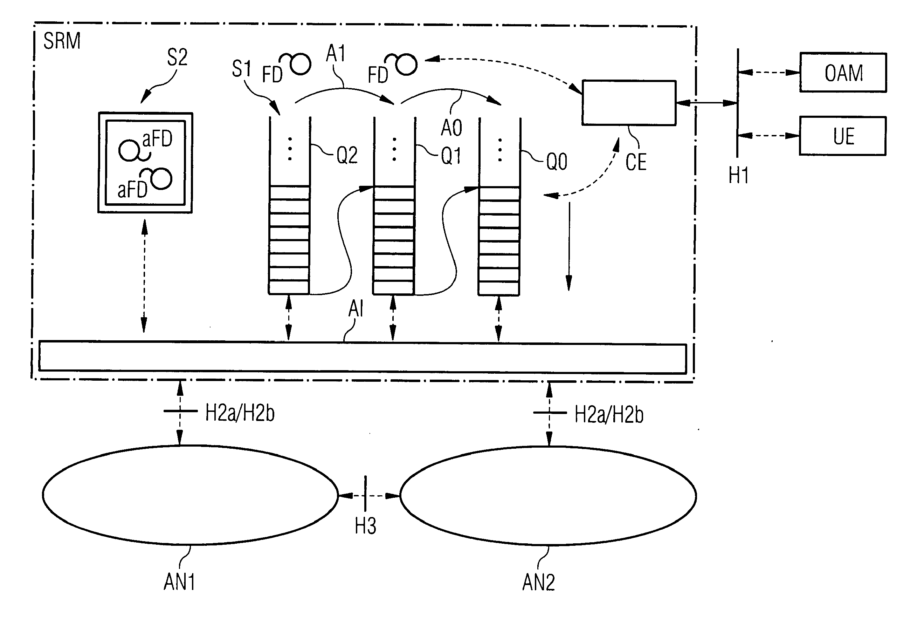

Hereinafter, the invention will be described with further embodiments and advantages by reference to the figure.

The sole figure shows a schematic view of a heterogeneous wireless communication system according to the invention.

Core element of the communication system is a pool SRM of flow descriptors FD. The flow descriptor pool SRM might be distributed, e.g. per routing area. Flow descriptors FD describe mandatory base parameters for each flow. A flow is defined as a stream of data for a specific application. The stream of data is exchanged between an user equipment UE and one of a number of access networks AN1 or AN2. All of the access networks AN1, AN2 of the communication system comprise a resource management entity and are connected to the flow descriptor pool SRM via an interface H2.

The interface H2 is separated in two parts: a query interface H2a is used by the access networks AN1, AN2 to query information of the flow descriptor pool SRM and to register or deregister a served flow. Interface H2b defines an event-notification like sub-interface where a controlling entity CE of the flow descriptor pool SRM and the attached resource management entities of the access networks AN1, AN2 can exchange notifications.

An interface H1 allows external entities, e.g. the user equipment UE and/or an OAM to register/deregister flows with the flow descriptor pool SRM. Finally, there is an interface H3 between access network AN1 and access network AN2 to coordinate QoS-aware handoffs among the access networks AN1, AN2.

The access networks AN1, AN2 (i.e. their resource management entities) check the existing flow descriptors FD in the flow descriptor pool periodically or event driven whether they are able to serve some of the described flows. This decision is done by a technology-specific resource management (including an admission control and allocation) and requires no action from other systems, especially the flow descriptor pool SRM. The access network AN1, AN2 which decides to serve a respective flow must fulfil the specified flow-related parameters, e.g. in terms of quality of service.

When a flow is assigned to an individual access network AN1, AN2, the respective flow descriptor is marked accordingly as assigned flow descriptor aFD. While so called non-assigned flow descriptors are stored in a first subset S1 of the flow descriptor pool SRM, assigned flow descriptors aFD are stored in a second subset S2 of the flow descriptor pool SRM.

An assigned flow descriptor is defined as a flow descriptor which corresponding flow currently is served by an access network. A non-assigned flow descriptor is defined as a flow descriptor which corresponding flow is waiting to be served by an access network.

The functionality and architecture of the flow descriptor pool SRM will be described more detailed below.

### Flow descriptor management

As described above, for each flow a dedicated flow descriptor FD exists which depicts the flows specific properties. The flow descriptors FD carry a set of mandatory fields, e.g. a vector specifying transport related parameters. Further, QoS requirements must be present to enable all access networks to verify their ability to fulfil the flow's QoS constraints. Network operators and users may define additional policies, e.g. with respect to compensation costs or authorization for certain types of networks. Thus, flow descriptors may carry optional information fields. The flow descriptor FD is stored within subset S1 in the flow descriptor pool SRM managed by the controlling entity CE. The controlling entity CE defines a service interface to external entities which enables their management entities to control dynamically creation and removal of flow descriptors. Via this interface, an user equipment may register flows explicitly and thus request controlled services from one of the access networks AN1, AN2.

The flow descriptor FD is created either implicitly, once an user equipment UE requests a connectivity service from one of the access networks AN1, AN2 under common resource management control, or explicitly, e.g. due to a management action. Flow descriptors FD are so called soft-state operations, i.e. they must be refreshed periodically either by the serving access network for implicit registration or by the controlling entity CE via a management action in the explicit case.

### Flow assignment and release

Non-assigned flow descriptors FD are verified by all attached access networks AN1, AN2 for providing service. This check may be done periodically or upon explicit notification by the controlling entity CE. Therefore, a control interface AI of the flow descriptor pool SRM is defined between the controlling entity CE and all connected access networks AN1, AN2 for the exchange of notifications. A number of event-notification and publish-subscribe architectures may be applied to such a control interface AI, which are well known from the prior art.

Each of the access networks AN1, AN2 makes an independent decision whether it is capable of providing the requested service including all QoS constraints specified in the flow descriptor FD. When a flow is assigned to an access network, it is marked accordingly to be assigned (assigned flow descriptor aFD) and moved to subset S2 of the assigned flow descriptors aFD. During this process, the access networks AN1, AN2 may regard local policies for making a service decision, e.g. based on their current load, available resources or technology-specific policies.

A flow may be released by the serving access network without any outer permission by the controlling entity CE. However, the service access network must continue its service provisioning unless another access network decides to serve the flow or the physical conditions do not allow continuously stable connectivity. In the latter case, the error condition must be signalled to the controlling entity CE which must reinsert the flow descriptor to the pool set for re-assignment with high priority. Continuing service provisioning by an access network may only be allowed if there are respective policies, e.g. premium subscriber services force out best effort services of subscribers. Assignments are so-called hard state operations, i.e. resources allocated with specific flow must not be released until the flow descriptor FD is either re-assigned to another access network or removed from the system by the controlling entity CE.

A flow descriptor FD can be re-inserted to the pool set of non-assigned flow descriptors FD even when it is still served by an access network. This allows a serving access network to force handoffs to another access network, e.g. for realization of seamless services. A flow transfer preparation phase should allow a serving and a candidate access network to verify the availability of suitable means for handover based on the flows QoS constraints. A handoff among access networks is not allowed when either the serving or the candidate access network are not capable to meet the QoS requirements of the served flow.

### Priority assignment and flow descriptor queues

The flow descriptor pool SRM is separated in at least two subsets S1 for assigned and S2 for non-assigned flow descriptors. However, all flow descriptors FD, aFD must define a deadline for obtaining service from one of the access networks AN1, AN2. This is especially true for flows already being served and requiring a handoff to another access network. Thus, a flat un-ordered set of non-assigned flow descriptors is insufficient. The flow descriptor pool SRM therefore defines a queuing system for ordering flow descriptors FD according to their deadline. Realizing a flow descriptor pool SRM without queues Q0, Q1, Q2 might result in a reduced QoS. Once a flow descriptor FD gets assigned to an access network AN1, AN2, it is removed from the queue Q0, Q1, Q2 and assigned to the subset S2 of assigned flow descriptors aFD.

A possible assignment strategy could be as follows: a multi-queuing system is assumed where queues Q0, Q1, Q2 are ordered accordingly to discrete priority value thresholds, i.e. all flows within a single queue Q0, Q1, Q2 are handled with the same priority. Within a singe queue, the flow descriptors FD are ordered according to their service deadline. The access networks AN1, AN2 always check the highest priority queue Q0 first. They are not allowed to serve any flows in lower priority queues Q1, Q2 unless the higher queue(s) Q0 is (are) empty. Based on an earliest-deadline-first (EDF) principle, the servable flow with the earliest deadline is chosen by one of the access networks AN1, AN2.

However, while this scheme ensures prioritised service for high priority flows, this scheme could also lead to starvation of flows located in low priority queues, especially Q2. To circumvent such situations, each flow descriptor gets assigned a priority value defining the current priority queue where the flow descriptor must be inserted. Initial priority values are calculated by the controlling entity CE based on the current flow service deadline. The controlling entity CE therefore increases the priority value for non-assigned flows periodically and re-assigns flow descriptors according to their actual priority value to the priority queues Q0, Q1, Q2 (cf. reference numeral A0, A1). Thus, with an increase in elapsed waiting time for service, the probability of a flow descriptor to get assigned to an access network AN1, AN2 is increased.

### Controlling entity

Within the flow descriptor pool SRM the controlling entity CE is responsible for managing all internal operations of the flow descriptor pool SRM. The operations include flow descriptor management with insertion and removal of flow descriptors to and from the pool. The controlling entity functions are accessible via interface H1 for flow management. The interface H1 can be used by external systems to drop, add or shift flows, e.g. OAM systems, access networks or even user equipment UE. Furthermore, the controlling entity CE is responsible for queue maintenance. It monitors the service deadlines of all active flow descriptors FD and calculates the priority values assigned to each flow descriptor FD and thus determines the mapping of all flow descriptors FD to individual priority queues. Flow descriptors FD are soft-state entities, i.e. they must be removed from the control entity when the flow descriptor's deadline is reached without receiving any renewal. In case flows cannot be served by any of the available access networks, the controlling entity acts as an arbiter and makes a decision where to force a flow assignment to a specific access network. However, the access network might reject this assignment due to physical resource constraints, e.g. an overload condition.

In a normal stable state operation, the priority assignment queues should remain empty. Thus, the queue size can be used as an indicator of the available overall system capacity. The controlling entity therefore rejects insertion of additional flows once pre-defined queue size thresholds are exceeded.

### Further improvements

Each flow descriptor may not only be marked by the access network currently serving the respective flow but may also contain a list of access systems which could take over this flow. Such an improvement may be used to optimize handovers.

Besides the flow descriptors currently served and waiting for a service, a third subset may be introduced containing flows that are currently served but not with an optimal QoS support. Certain services benefit from flexible QoS vectors. For instance, it is possible to use different codecs for voice and video. For such services, it is advantageous if a QoS vector does not contain absolute numbers but rather ranges. If such a flow can only be served by an access network with low quality, the flow descriptor is put into this new subset. Once an access network is able to serve this flow better, it is re-assigned.

Furthermore, a fourth subset or an alternative to the above third subset one could take all currently served services that are tolerable to modifications to the current QoS. The tolerance to the current QoS may be in both directions up and down.

## Claims

1. A method for resource management in a heterogeneous wireless communication system, comprising a number of access networks, at least some of them having a resource management entity being responsible for executing flows between a number of user equipment and the respective access network, comprising the steps of:
- providing a flow descriptor comprising flow specific properties for each flow within the communication system;
- storing all of the provided flow descriptors within a flow descriptor pool;
- checking the flow descriptors in the flow descriptor pool whether their respective flow specific properties are able to be served by one of the access networks; and
- allocating resources by the access networks for a flow based on the evaluation of the flow descriptor pool.

2. The method according to claim 1, wherein each of the flow descriptors comprises at least one or more of the below stated parameters: IP transport address, IP flow identifier, QoS parameters, policy information, location information.

3. The method according to claim 1 or 2, wherein the step of checking the flow descriptors in the flow descriptor pool is carried out by the resource management entities of a respective access network.

4. The method according to claim 3, wherein the step of checking the flow descriptors in the flow descriptor pool is carried out periodically.

5. The method according to claim 3, wherein the step of checking the flow descriptors in the flow descriptor pool is carried out event driven.

6. The method according to one of the claims 1 to 5, wherein a flow descriptor for a flow is created when an user equipment connects to one of the access networks for the first time.

7. The method according to one of the claims 1 to 5, wherein a flow descriptor for a flow is created by negotiation between an user equipment and a controlling entity of the flow descriptors pool.

8. The method according to one of the claims 1 to 5, wherein a flow descriptor is created for every new application.

9. The method according to one of the preceding claims, wherein the flow descriptors pool is separated at least in two subsets for assigned and non-assigned flow descriptors.

10. The method according to claim 9, wherein when a flow will be served or currently is served by one of the access networks, the respective flow descriptor will be marked as assigned flow descriptor.

11. The method according to claim 10, wherein assigned flow descriptors will be excluded from the step of checking the flow descriptors in the flow descriptor pool for the purpose of assigning it to one of the access networks.

12. The method according to one of the preceding claims, wherein flow descriptors will remain in the flow descriptor pool when the respective flows can not be served by one of the access networks.

13. The method according to one of the preceding claims, wherein upon storing a flow descriptor in the flow descriptor pool for each flow descriptor a deadline for obtaining service from one of the access networks is defined.

14. The method according to claim 13, wherein the flow will be refreshed periodically by recalculating its flow descriptor's deadline.

15. The method according to claim 13 or 14, wherein the flow descriptors in the flow descriptor pool are ordered in one or more queues according to their deadline.

16. The method according to claim 15, wherein flow descriptors within the same queue are handled with the same priority.

17. The method according to claim 15 or 16, wherein in case the flow descriptor pool comprises more than one queue, each of the queues is assigned to a different priority.

18. The method according to claim 17, wherein queues with the highest priority are checked first.

19. The method according to claim 17 or 18, wherein a queue with a lower priority is checked when all of the flow descriptors of a queue with a higher priority are assigned flow descriptors.

20. The method according to one of the claims 16 to 19, wherein each of the flow descriptors is assigned to an initial priority value based on the current flow service deadline which will be increased unless the flow descriptor does not become an assigned flow descriptor within the current service deadline.

21. The method according to one of the preceding claims, wherein when a flow cannot be served by any of the access networks, the controlling entity acts as an arbiter and makes a decision in which of the access networks a flow assignment can be forced.

22. The method according to one of the preceding claims, wherein the controlling entity rejects an insertion of additional flows into the flow descriptor pool if predefined queue size thresholds are exceeded.

23. The method according to one of the preceding claims, wherein when a flow is to be released by a serving access network the serving access network continues its service provisioning unless
- - another access network decides to serve the flow or
- - physical conditions do not allow continuously stable connectivity.

24. The method according to one of the preceding claims, wherein resources allocated to a specific flow must not be released until the flow descriptor is either re-assigned to another access network of the number of access networks or removed from the flow descriptor pool.

25. The method according to one of the preceding claims, wherein a flow descriptor can be re-inserted to the pool subset of non-assigned flow descriptors even when it still is served by an access network of the number of access networks.

26. The method according to one of the preceding claims, wherein each of the flow descriptors additionally contains a list of access networks that are able to take over the respective flow.

27. The method according to one of the preceding claims, wherein the assigned flow descriptors in the flow descriptor pool comprises information about not optimal QoS support.

28. The method according to one of the preceding claims, wherein the assigned flow descriptors in the flow descriptor pool comprises a bandwidth for services which are tolerable to modifications to the current QoS.

29. A computer program product directly loadable into the internal memory of a digital computer, comprising software code portions for performing the steps of the preceding claims when said product is run on a computer.

30. A heterogeneous wireless communication system, comprising
- a number of access networks, at least some of them having a resource management entity being responsible for executing flows between a number of user equipment and the respective access network; and
- a resource management system comprising a flow descriptor pool for providing flow descriptors, each of the flow descriptors having flow specific properties for each flow within the communication system wherein the flow descriptors in the flow descriptor pool may be checked whether their respective flow specific properties are able to be served by one of the access networks for the purpose of allocating resources by one of the access networks based on the evaluation of the flow descriptor pool.

31. The system according to claim 30, wherein the resource management system comprises an interface to the resource management entities of the number of access networks for exchanging of data regarding the allocation of resources for flows.

32. The system according to claim 30 or 31, wherein the resource management system comprises an interface to external entities.

33. The system according to one of the claims 31 to 32, wherein the resource management system comprises a controlling entity for administrating the flow descriptors in the flow descriptor pool.

34. The system according to claim 33, wherein the controlling entity is to set up a flow descriptor in case an user equipment connects to one of the access networks for the first time.

35. The system according to claim 33, wherein the controlling entity is to set up a flow descriptor in case an user equipment and a controlling entity of the flow descriptors pool are negotiating about resources for a flow.

36. The system according to one of the claims 30 to 35, wherein the flow descriptor pool comprises separate entities for storing
- - non-assigned flow descriptors which are waiting to be served by one of the access networks,
- - assigned flow descriptors which are served by one of the access networks,
- - assigned flow descriptors having a not optimal QoS support, and
- - assigned flow descriptors allowing a bandwidth for the current QoS support.
